# FASCICULE DE BREVET EUROPEEN

(11) **EP 1 972 527 B1**
(45) Date de publication et mention de la délivrance du brevet: **11.01.2012**
(21) Numéro de dépôt: 08152343.3
(22) Date de dépôt: 06.03.2008
(51) Int. Cl.: B62D 21/15, B62D 25/08, B62D 35/02, B60R 21/34

(54) **Carénage de protection moteur renforcé pour véhicule**
Verstärkte Motorschutzverkleidung für Fahrzeug
Reinforced engine protection shielding for a vehicle

(30) Priorité: 21.03.2007 FR 0753967; 21.03.2007 FR 0753968
(43) Date de publication de la demande: 24.09.2008
(73) Titulaire: PEUGEOT CITROËN AUTOMOBILES S.A., 78140 Vélizy Villacoublay (FR)
(72) Inventeur: Coulombier, Donat Rémy Aimé, 78280 Guyancourt (FR); Leclère, Guillaume, 91300 Massy (FR); Lefèvre, Eric René Félicien, 91470 Limours (FR)
(74) Mandataire: Allain, Laurent

(56) Documents cités:
- EP-A- 0 847 912
- EP-A- 1 614 610
- WO-A-00/30916
- WO-A-2006/114525
- DE-A1- 3 322 334

## Description

La présente invention concerne un carénage de protection moteur renforcé pour véhicule, en particulier pour véhicule automobile. Elle concerne aussi un bloc avant de véhicule comportant un tel carénage de protection moteur renforcé.

Le carénage de protection moteur - qui peut être aussi désigné « écran sous moteur » ou « écran sous GMP (Groupe motopropulseur)» - équipe le bloc avant de nombreux véhicules automobiles. Il s'agit d'une pièce en forme principale de plaque, en matière thermo formable le plus souvent, qui est fixée à la partie basse du pare-chocs sous le moteur et qui est en appui sur le berceau moteur. Le carénage de protection moteur a pour fonction de fermer la partie inférieure du berceau moteur pour isoler le moteur de l'extérieur et le protéger des chocs éventuels lors, par exemple, d'un passage de bord de trottoir, et des projections de boue lors de la marche du véhicule.

Dans de nombreux véhicules actuels, le bloc avant intègre une voie de transmission d'effort principale - ou voie haute - formée par les longerons ou brancards, et une voie additionnelle de transmission d'effort - ou voie basse - qui vient dédoubler la voie principale. Cette voie basse est obtenue par l'adoption d'un berceau long constitué d'un berceau standard auquel ont été ajoutées des prolonges dites prolonges de berceau.

Cette voie basse de transmission d'effort est performante, mais reste toutefois relativement coûteuse et lourde.

Dans le but d'améliorer le comportement des véhicules en cas de choc véhicule/véhicule, on a cherché à renforcer le carénage de protection moteur.

On connaît, par exemple, selon le document FR 2 814 425, un carénage de protection moteur renforcé pour véhicule, qui comporte une partie essentiellement plane et au moins un profilé à section transversale en forme de « U » ouvert vers le bas, l'un parmi la partie plane et le profilé comprenant un premier matériau comportant deux couches en matière thermoplastique renforcée entre lesquelles s'étend une couche intermédiaire, l'autre parmi la partie plane et le profilé comprenant un deuxième matériau différent du premier matériau. La couche intermédiaire est une couche de matière alvéolaire. Toutefois, un carénage de protection moteur ainsi renforcé présente des interfaces qui ne permettent pas de garantir une bonne absorption de l'énergie cinétique et une transmission effective des efforts lors d'un choc. Le brevet DE 33223341, divulgue, quant à lui, un carénage de protection moteur renforcé, muni d'un renfort allongé, et parallèle à l'axe longitudinal du véhicule. Ce renfort est réalisé sur le carénage, et est assimilable à une protubérance allongée, dont la section a une forme de U.

Enfin le document EP-A-0 847 912 divulgue un procédé de fabrication d'une piece de fermeture sous moteur de véhicule automobile, ladite pièce étant bordée latéralement par deux longerons de section ouverte en forme de U. Cette piece de fermeture est conforme au preambule de la revendication 1.

Le but de la présente invention est de fournir un carénage de protection moteur renforcé, pouvant présenter une grande variabilité de caractéristiques mécaniques, grâce à l'adjonction de pièces de renforcement autonomes, et indépendantes dudit carénage. De cette manière, les carénages selon l'invention sont modulaires, et peuvent donc répondre, en matière de sécurité, à une multiplicité de sollicitations externes.

Un autre but de la présente invention est de fournir un carénage de protection moteur renforcé, qui permette d'augmenter la capacité d'absorption d'énergie du véhicule par rapport aux carénages sous moteur et autres dispositifs de protection sous moteur renforcés de l'art antérieur, quelque soit la vitesse du choc.

Un autre but de la présente invention est de fournir un carénage de protection moteur renforcé, qui puisse jouer pleinement le rôle de voie de transmission d'effort supplémentaire.

Un autre but de la présente invention est de fournir un tel carénage de protection moteur, qui permette d'améliorer l'acoustique du véhicule.

Un autre but de la présente invention est de fournir un tel carénage de protection moteur, qui puisse jouer le rôle que jouent des prolonges de berceau dans différentes structures de bloc avant de l'art antérieur.

Un autre but de la présente invention est de fournir un tel carénage de protection moteur, qui permette d'améliorer l'acoustique du véhicule.

C'est également un but de la présente invention de fournir un tel carénage de protection moteur renforcé, qui soit de conception simple, de réalisation aisée, qui soit fiable et économique.

Enfin, c'est encore un but de la présente invention de fournir un bloc avant de véhicule, en particulier de véhicule automobile, qui constitue un perfectionnement aux blocs avant de l'art antérieur en termes de sécurité passive, c'est-à-dire qui soit conçu pour mieux éviter des blessures graves aux conducteurs et passagers en cas d'accident.

Pour parvenir à ces buts, la présente invention propose un bloc avant de véhicule, comprenant un carénage de protection moteur renforcé pour véhicule tel que décrit par la revendication 1. Les deux parties de renforcement sont constituées par des pièces rapportées et fixées sur la partie principale en forme de plaque. De cette manière, ces parties de renforcement peuvent revêtir une pluralité de formes, avoir des tailles variées et être constituées d'une pluralité de matériaux constitutifs.

Avantageusement, les parties de renforcement présentent une section sensiblement constante selon leur direction longitudinale.

Selon une autre variante de réalisation de l'invention, les parties de renforcement présentent une section évolutive qui augmente progressivement de la partie avant vers la partie arrière de ces parties de renforcement.

De façon préférentielle, la section des parties de renforcement est choisie parmi l'une des formes suivantes : carrée, rectangulaire, polygonale, ou en « huit ».

Préférentiellement, les parties de renforcement sont pourvues dans leur partie avant et dans leur partie arrière d'éléments de fixation supplémentaires dudit carénage de protection sur le véhicule, de manière à améliorer l'efficacité des parties de renforcement lors d'un choc du véhicule.

Avantageusement, lesdits éléments de fixation supplémentaires sont des vis de fixation, et les parties de renforcements sont pourvues dans leur partie avant et dans leur partie arrière d'orifices transversaux pour le passage des vis de fixation.

De façon préférentielle, la partie principale en forme de plaque est pourvue de nervures de façon à améliorer sa rigidité.

Préférentiellement, les parties de renforcement sont obtenues par injection d'une matière plastique de type polypropylène.

De façon avantageuse, les parties de renforcement incorporent des inserts métalliques directement surmoulés lors de l'injection de la matière plastique.

Selon un premier mode de réalisation préféré de l'invention, les deux parties de renforcement sont constituées de cloisons croisées, obliques, sensiblement verticales, de manière à ce que le carénage de protection moteur absorbe mieux l'énergie lors d'un choc du véhicule.

Avantageusement, lesdits réseaux de cloisons croisées, obliques, forment une structure de type « nid d'abeille » à cellules à section quadrilatérale.

Selon un deuxième mode de réalisation préféré de l'invention, les deux parties de renforcement sont constituées par des profilés tubulaires.

De façon préférentielle, les profilés tubulaires sont pourvus d'entretoises disposées à l'intérieur de leur section, de façon à empêcher l'écrasement de la section lors du serrage des vis de fixation.

L'invention se rapporte également à un bloc avant de véhicule, comportant un berceau moteur, un pilier, des brancards et un carénage de protection moteur fixé sous le moteur du véhicule et en appui sur le berceau moteur. La principale caractéristique d'un bloc avant de véhicule, selon l'invention, est que ledit carénage de protection moteur est un carénage de protection moteur renforcé conforme à celui de l'invention.

Selon un mode de réalisation préféré de réalisation de ce bloc avant, dans lequel les parties de renforcement sont pourvues dans leur partie avant et dans leur partie arrière d'éléments de fixation supplémentaires du carénage de protection moteur sur le véhicule, les orifices avant servent au passage de vis de fixation qui sont reprises sous le pilier du bloc avant.

De façon avantageuse, il est prévu une plaque d'appui, soudée sur le pilier et située devant la section de la partie de renforcement, de façon à avoir une surface d'appui plane de la partie de renforcement contre ledit pilier.

Préférentiellement, il est prévu une cale élastique sur la fixation arrière de la partie de renforcement.

Avantageusement, il est prévu une cale élastique sur la fixation avant de la partie de renforcement.

D'autres buts, avantages et caractéristiques de l'invention apparaîtront dans la description qui suit d'exemples de réalisation de l'invention, non limitatifs de l'objet et de la portée de la présente demande de brevet, accompagnée de dessins dans lesquels :
- la figure 1 représente, de manière schématique, un carénage de protection moteur de type conventionnel,
- la figure 2 représente, de manière schématique, une partie de bloc avant de véhicule incluant le carénage de protection moteur de type conventionnel de la figure 1 en position de fermeture de la partie inférieure du berceau moteur,
- la figure 3 représente, de manière schématique, un premier mode de réalisation préféré d'un carénage de protection moteur renforcé, selon le principe de la présente invention,
- la figure 4 est une vue en perspective, partielle, schématique, du premier mode de réalisation préféré du carénage de protection moteur renforcé selon la présente invention,
- la figure 5 est une vue en perspective, partielle, schématique, d'une variante de réalisation du premier mode de réalisation préféré d'un carénage de protection moteur selon la présente invention,
- la figure 6 est une vue en perspective, partielle, schématique, du carénage de protection moteur renforcé de la figure 5 après fixation sur le véhicule, intégrant les fixations supplémentaires,
- la figure 7 représente, de manière schématique, une partie de bloc avant de véhicule, incluant le carénage de protection moteur renforcé des figures 5 et 6 et montrant l'emplacement des fixations supplémentaires du carénage de protection moteur renforcé sur le véhicule, et
- la figure 8 représente, de manière schématique, un bloc avant de véhicule incluant le premier mode de réalisation préféré d'un carénage de protection moteur renforcé selon l'invention, en place entre le pilier et le berceau du bloc avant du véhicule.
- la figure 9 représente, de manière schématique, un carénage de protection moteur renforcé, selon un deuxième mode de réalisation préféré de la présente invention,
- la figure 10 représente un profilé de renforcement du carénage de protection moteur de la figure 9,
- la figure 11 est une vue en perspective, partielle, schématique, d'une variante de réalisation du deuxième mode de réalisation préféré d'un carénage de protection moteur selon la présente invention,
- la figure 12 est une vue en perspective, partielle, schématique, d'une autre variante de réalisation du deuxième mode de réalisation préféré d'un carénage de protection moteur selon la présente invention, intégrant les fixations complémentaires,
- la figure 13 est une vue en perspective, partielle, schématique, du carénage de protection moteur renforcé de la figure 12 après fixation sur le véhicule,
- la figure 14 représente, de manière schématique, une partie de bloc avant de véhicule, incluant le carénage de protection moteur renforcé des figures 12 et 13 et illustrant les fixations supplémentaires du carénage renforcé sur le véhicule, et
- la figure 15 représente, de manière schématique, un bloc avant de véhicule incluant le deuxième mode de réalisation préféré d'un carénage de protection moteur renforcé selon la présente invention, en place entre le pilier et le berceau du bloc avant.

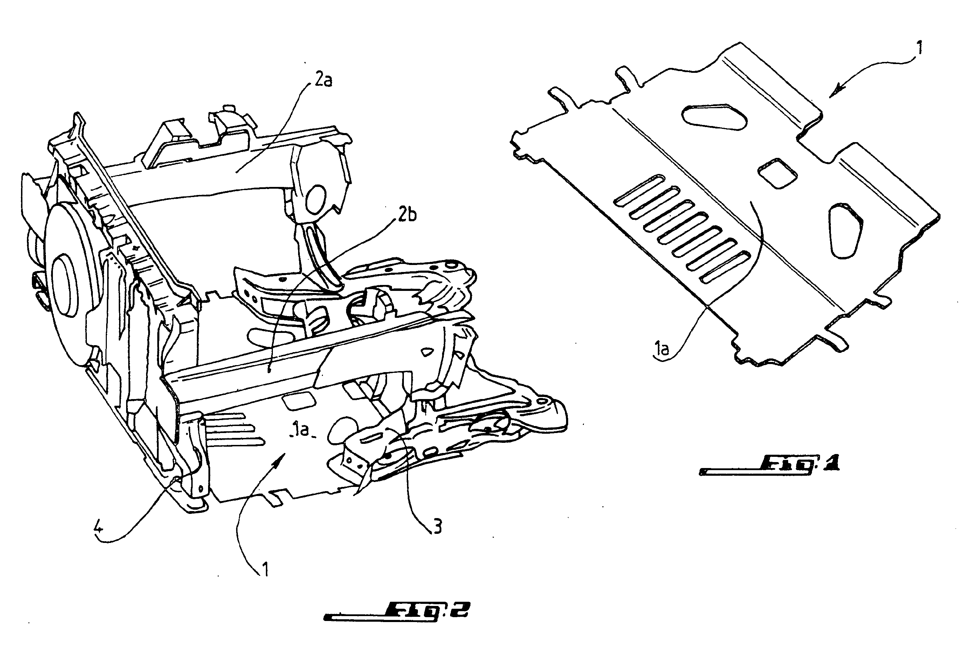

En référence aux dessins des figures 1 et 2, on a représenté un carénage de protection moteur 1, de type conventionnel, seul (figure 1) et en position fixée sur un bloc avant de véhicule (figure 2). Le carénage de protection moteur 1 présente la forme générale d'une plaque 1a réalisée, le plus souvent, en matériau thermo formable, à savoir en matière thermoplastique renforcée ou non, ou en matière plastique SMC, ou en matière plastique injectée, etc.

Le carénage de protection moteur 1 ferme la partie inférieure du berceau 3 du bloc avant du véhicule (non représenté en totalité), entre le berceau 3 et le pilier 4 à l'avant du bloc avant. Le bloc avant intègre une voie haute de transmission d'effort, conventionnelle, constituée par les brancards 2a et 2b. Cette voie haute absorbe de l'énergie en cas de choc et en facilite la dissipation.

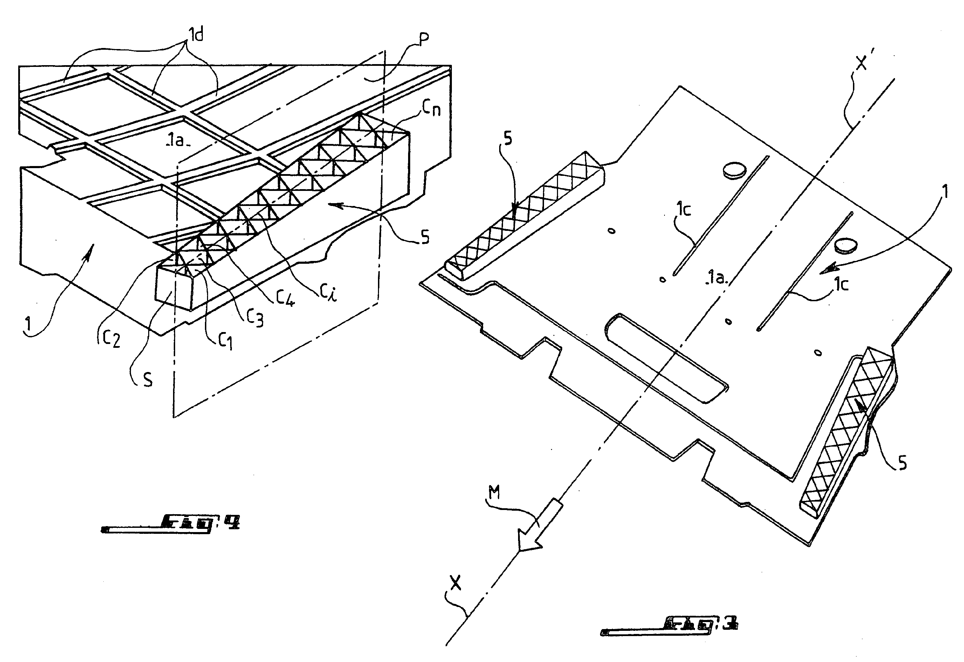

De façon à transmettre plus d'effort et à absorber plus d'énergie en cas de choc, le carénage de protection moteur 1 est renforcé, comme cela est représenté sur les figures 3 et 4. La partie principale en forme de plaque 1a peut être renforcée, de manière connue en soi, par augmentation de son épaisseur, ou par changement de matériau (matériau plus rigide), ou encore par ajout de nervures simples 1c (figure 3) ou de nervures croisées 1d (figure 4), par exemple.

Les deux parties latérales du carénage de protection 1 intègrent, chacune, une partie de renforcement 5. Les deux parties de renforcement 5 sont disposées de manière symétrique par rapport à l'axe longitudinal XX' du carénage de protection 1 et s'étendent suivant la direction correspondant à la direction de marche référencée M du véhicule.

Selon un premier mode de réalisation préféré d'un carénage selon l'invention, chaque partie de renforcement 5 présente une forme générale sensiblement parallélépipédique dont l'intérieur est constitué par un réseau régulier de nervures ou cloisons obliques croisées Cᵢ (i de 1 à n), sensiblement dans des plans perpendiculaires à la surface du bord latéral de la partie principale en forme de plaque 1a. Le réseau de cloisons obliques est sensiblement symétrique par rapport au plan P longitudinal de la partie de renforcement 5. La structure cloisonnée de la partie de renforcement 5 lui confère une structure interne de type « nid d'abeilles » à cellules à section quadrilatérale : carrée, rectangulaire, en losange, etc.

Les faces supérieures des parties de renforcement 5 peuvent être recouvertes d'une pièce en forme de cache (non représentée) pour éviter que des matières étrangères viennent se loger dans les cellules de la structure de « nid d'abeilles ».

Ce premier mode de réalisation préféré de l'invention, permet d'avoir une bonne stabilité en compression de la partie de renforcement 5 lors d'un choc frontal et optimise la réalisation des parties de renforcement 5 puisque celles-ci peuvent être directement intégrées au carénage de protection moteur. Le nombre n de cloisons obliques cᵢ, leur orientation, leur épaisseur et leur matériau constitutif sont choisis, de manière connue en soi, pour obtenir le niveau de tenue en effort souhaité.

La partie de renforcement cloisonnée 5 peut présenter une section S sensiblement constante sur toute sa longueur. En variante, la section S de la partie de renforcement 5 peut être évolutive, en augmentation progressive et continue de l'avant vers l'arrière, afin d'assurer une déformation progressive et maîtrisée de l'avant de la partie de renforcement 5 vers l'arrière de la partie de renforcement 5 lors d'un choc. L'augmentation progressive de la section S de la partie de renforcement 5 de l'avant vers l'arrière peut également être discontinue, par paliers successifs par exemple.

Les cloisons cᵢ peuvent avoir une épaisseur comprise entre 1mm et 5mm, par exemple.

Il est plus avantageux de jouer sur le nombre n, l'orientation et l'épaisseur des cloisons cᵢ pour obtenir le niveau d'effort transmis recherché, plutôt que de jouer sur le matériau constitutif, parce que cela permet d'intégrer les cloisons croisées cᵢ directement dans la définition du carénage de protection moteur 1. Le réseau de cloisons croisées est réalisé sur une pièce indépendante, laquelle est ensuite fixée sur la partie principale 1a du carénage de protection 1. L'assemblage des réseaux de cloisons croisées sur la partie principale 1a du carénage de protection 1 peut se faire selon différents procédés connus : soudage, collage, assemblage par rivets, vissage, etc.

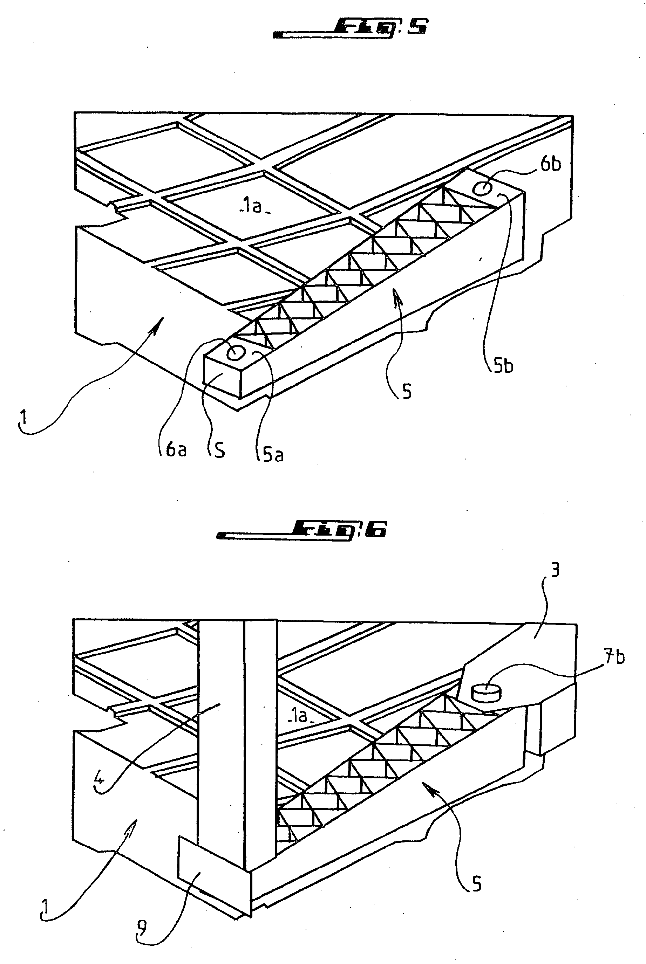

Selon une variante de réalisation de ce premier mode de réalisation préféré d'un carénage de protection moteur renforcé 1 selon l'invention, représentée sur la figure 5, outre les fixations conventionnelles dudit carénage de protection sur le véhicule, il est prévu des éléments de fixation supplémentaires en partie avant et en partie arrière des parties de renforcement 5. Ces éléments de fixation peuvent être des vis de fixation. Des orifices traversant la section S sont prévus en partie avant (orifices 6a) et en partie arrière (orifices 6b) des parties de renforcement 5 pour le passage de vis de fixation supplémentaires qui ont pour fonction d'améliorer encore le comportement en choc des parties de renforcement 5. A cette fin, les parties de renforcement 5 comprennent des parties d'extrémité avant 5a et arrière 5b, de faible longueur dans lesquelles sont réalisés les orifices 6a, respectivement 6b, pour le passage des éléments de fixation supplémentaires.

On a représenté sur la figure 6 le carénage de protection moteur renforcé de la figure 5, après fixation sur le véhicule.

Une vis de fixation (non représentée) située à l'avant se reprend sous le pilier 4. Une plaque d'appui 9, soudée sur le pilier et située devant la section de la partie de renforcement 5, permet à la section S de la partie de renforcement 5 d'avoir une surface d'appui plane. De façon générale, il est avantageux de mettre en place des surfaces d'appui permettant aux parties de renforcement 5, lors d'un choc, de bien travailler en compression entre le pilier 4 avant et le berceau 3 en partie arrière. Dans ce cas, comme on peut le voir sur les figures 6 à 8, les parties de renforcement 5 assurent les rôles joués par les prolonges de berceau de certaines structures de bloc avant de l'art antérieur.

La vis de fixation arrière 7b (figure 6) se reprend sur le berceau 3. Ce mode de fixation offre l'avantage de permettre un montage parfaitement vertical du carénage de protection renforcé 1 sur le véhicule.

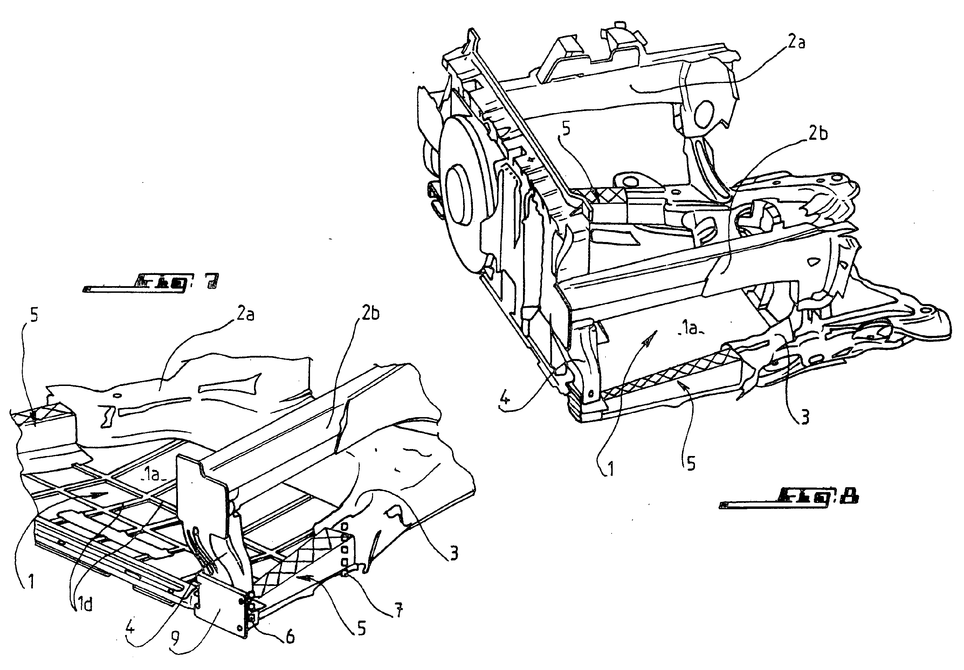

La figure 7 représente, de manière schématique, une partie de bloc avant de véhicule, incluant le carénage de protection moteur renforcé 1 des figures 5 et 6 et illustrant les fixations supplémentaires du carénage de protection 1 sur le véhicule. Les fixations supplémentaires sont schématisées par leur emplacement. L'emplacement de la fixation avant est référencé 6 et celui de la fixation arrière est référencé 7.

La figure 8 représente, de manière schématique, un bloc avant de véhicule incluant ce premier mode de réalisation préféré d'un carénage de protection moteur renforcé 1 tel que décrit ci-dessus, en place entre le pilier 4 et le berceau 3 du bloc avant, selon la présente invention. Dans la structure ainsi représentée, le carénage de protection moteur 1 est utilisé comme voie de transmission d'effort et d'absorption d'énergie supplémentaire, pour améliorer le comportement au choc du véhicule.

D'autres modes de fixation supplémentaire du carénage de protection moteur renforcé 1 sur le véhicule peuvent être envisagés. Il peut s'agir d'une fixation par des vis orientées différemment ou par des emmanchements.

Dans le cas d'un berceau 3 filtré, il est possible d'ajouter une cale élastique (non représentée) sur la fixation arrière 6b, 7b de la partie de renforcement 5.

Il est également possible de prévoir, dans la zone du pilier 4, une cale élastique (non représentée) sur la fixation avant 6a de la partie de renforcement 5, de telle sorte que, lors d'un choc de type « réparabilité », le carénage de protection 1 puisse reculer en récupérant les jeux sans détériorer le pilier 4 avant de mettre le berceau en contrainte.

Selon un deuxième mode de réalisation préféré d'un carénage de protection moteur renforcé selon l'invention, les deux parties latérales du carénage de protection 1 intègrent, chacune, un profilé tubulaire 15, directement fixé sur la partie principale en forme de plaque 1a. Chaque profilé tubulaire 15 est réalisé avec une section S tubulaire, c'est-à-dire une section S fermée, de forme carrée, rectangulaire, polygonale ou en « huit », par exemple.

Les profilés tubulaires 15 sont disposés de manière sensiblement symétrique par rapport à l'axe longitudinal XX' du carénage de protection 1 et s'étendent sensiblement dans une direction voisine de la direction de marche M du véhicule.

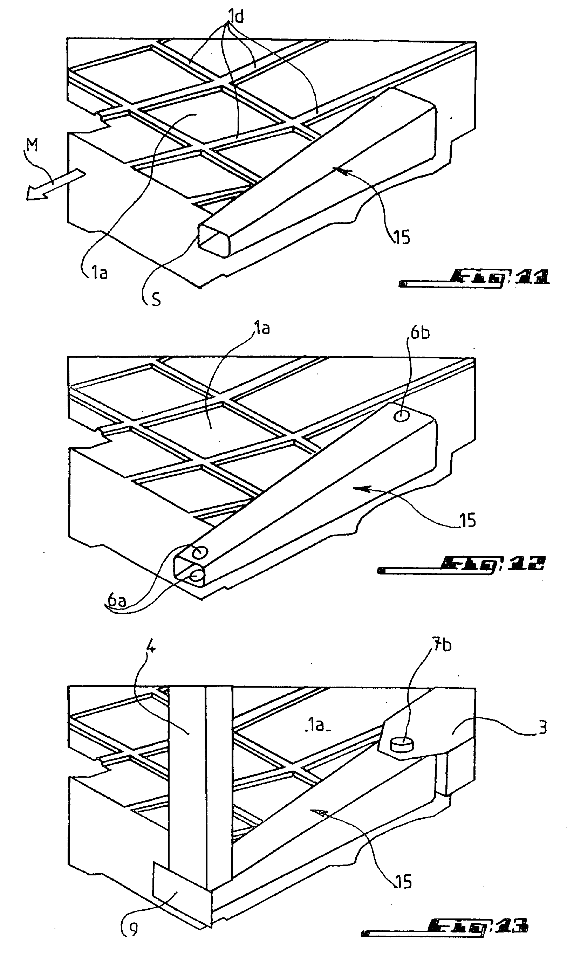

La section S du profilé tubulaire 15 peut être une section constante (mêmes dimensions) sur toute la longueur du profilé tubulaire 15. En variante, la section S peut être à section évolutive, c'est-à-dire de dimensions variables, en augmentation progressive, continue ou par paliers entre la partie avant et la partie arrière du profilé tubulaire 15. Un tel profilé tubulaire 15 à section « carrée », évolutive, est également représenté sur la figure 11, en position fixée sur la partie en forme de plaque la du carénage de protection 1. Dans l'exemple de réalisation de la figure 11, la zone centrale de la partie en forme de plaque 1a du carénage de protection 1 est pourvue de nervures 1d, de façon à en augmenter la rigidité.

Le mode de réalisation de la figure 11 permet d'avoir une meilleure stabilité en compression du profilé lors d'un choc frontal, parce qu'il n'existe plus de discontinuité de raideur dans la section S. La forme évolutive de la section S permet d'avoir une déformation progressive et maîtrisée de l'avant vers l'arrière du profilé tubulaire 15 lors d'un choc.

Selon un mode de réalisation non limitatif de l'objet et de la portée de la présente demande de brevet, la section S des profilés tubulaires 15 peut être obtenue par injection d'un matériau plastique. A titre d'exemple, la section des profilés tubulaires 15 peut être comprise entre 1 mm et 5mm, et la matière plastique injectée peut être de type polypropylène. Le choix du matériau et le choix de l'épaisseur de la section S des profilés tubulaires 15 dépendent du niveau de tenue en effort recherché. En variante, on peut réaliser la partie en forme de plaque 1a du carénage de protection 1 et les profilés tubulaires 15 en acier, ou en aluminium, ou en matériaux composites. Les profilés tubulaires 15 étant dissociés de la partie en forme de plaque 1a, on peut envisager des matériaux différents pour la partie 1a et les profilés tubulaires 15, par exemple des profilés tubulaires 15 métalliques, en aluminium par exemple, combinés à une partie en forme de plaque 1a en matière plastique.

L'assemblage des profilés tubulaire 15 sur la partie en forme de plaque 1a peut se faire selon différents procédés connus. Les profilés tubulaires 15 peuvent être soudés, ou collés, sur la partie 1a, si celle-ci et les profilés tubulaires 15 sont en matière plastique. En variante, les profilés tubulaires 15 peuvent être assemblés par des rivets, ou par des éléments de vissage (boulons, vis, écrous cage, etc.), à la partie en forme de plaque la. Si la partie en forme de plaque la est en matière plastique et les profilés tubulaires 15 en matériau métallique, on peut envisager d'insérer directement les profilés tubulaires 15 à l'intérieur de la plaque 1a (insert métallique).

Selon une variante de réalisation de ce deuxième mode de réalisation préféré d'un carénage de protection moteur renforcé selon l'invention, représentée sur la figure 12, outre les fixations conventionnelles du carénage de protection sur le véhicule, il est prévu des éléments de fixation supplémentaires en partie avant et en partie arrière des profilés tubulaires 15. Ces éléments de fixation supplémentaires peuvent être des vis de fixation. Des orifices traversant la section S sont prévus en partie avant (orifices 6a) et en partie arrière (orifices 6b) dans la section des profilés tubulaires 15 pour le passage de vis de fixation supplémentaires, qui ont pour fonction d'améliorer encore le comportement en choc des profilés tubulaires 15 (la tête de la vis de fixation 7b en partie arrière est représentée sur le dessin de la figure 13). Dans cette variante avec fixations supplémentaires, des entretoises (non représentées) ou tout autre dispositif équivalent, connu en soi, sont disposées à l'intérieur de la section S, de manière à empêcher l'écrasement de la section S des profilés 15 lors du serrage des vis de fixation.

On a représenté sur la figure 13 le carénage de protection moteur renforcé de la figure 12, après fixation sur le véhicule.

La vis de fixation (non représentée) située à l'avant se reprend sous le pilier 4. Une plaque d'appui 9, soudée sur le pilier 4 et située devant la section du profilé tubulaire 15, permet à la section S du profilé 15 d'avoir une surface d'appui plane. De façon générale, il est avantageux de mettre en place des surfaces d'appui planes permettant aux profilés tubulaires 15, lors d'un choc, de bien travailler en compression entre le pilier 4 avant et le berceau 3 en partie arrière. Dans ce cas, comme on peut le voir sur les figures 13 à 15, les profilés tubulaires 15 assurent les rôles joués par les prolonges de berceau de certaines structures de bloc avant de l'art antérieur.

En référence encore à la figure 13, la vis de fixation arrière 7b se reprend sur le berceau 3. Ce mode de fixation offre l'avantage de permettre un montage parfaitement vertical du carénage de protection moteur renforcé 1 sur le véhicule.

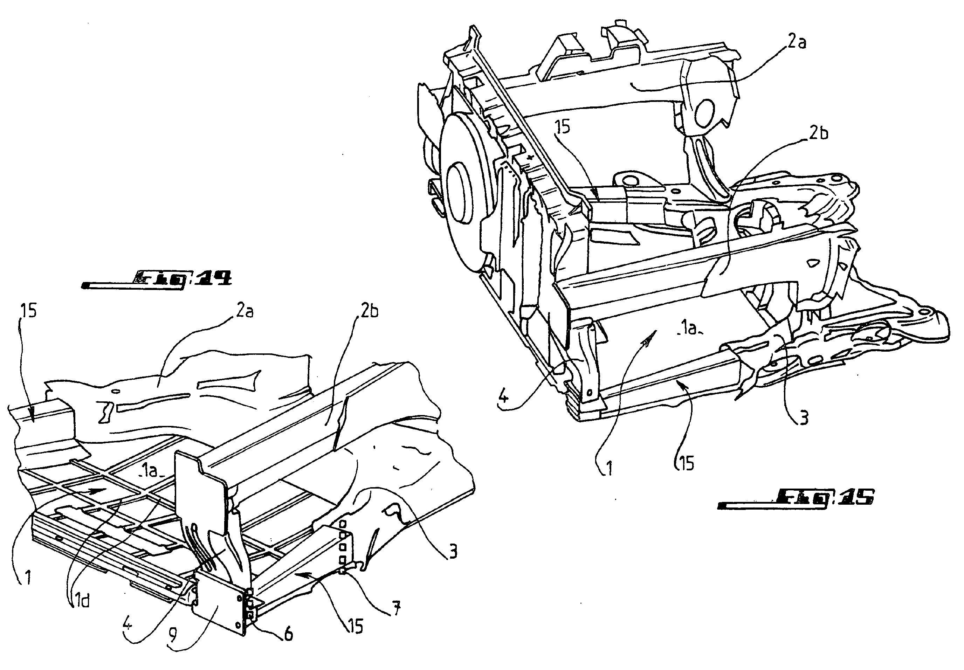

La figure 14 représente, de manière schématique, une partie de bloc avant de véhicule, incluant le carénage de protection moteur 1 des figures 12 et 13 et illustrant les fixations supplémentaires du carénage de protection 1 sur le véhicule. Les fixations supplémentaires sont schématisées par leur emplacement. L'emplacement de la fixation avant est référencé 6 et celui de la fixation arrière est référencé 7.

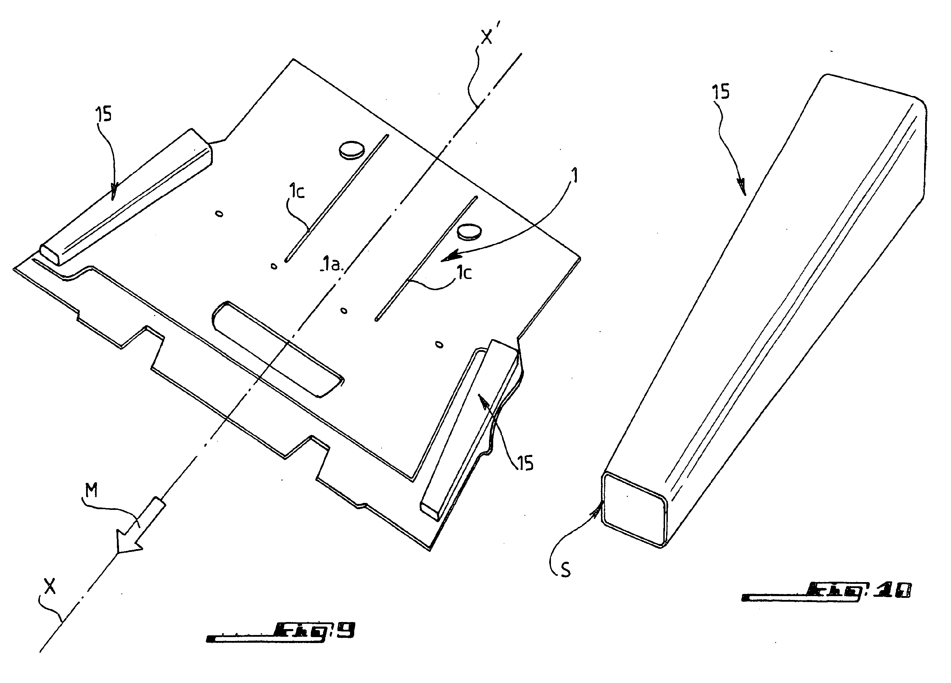

La figure 9 représente, de manière schématique, un bloc avant de véhicule incluant un carénage de protection moteur renforcé 1 tel que décrit ci-dessus, en place entre le pilier 4 et le berceau 3 du bloc avant, selon la présente invention. Dans la structure ainsi représentée, le carénage de protection moteur 1 est utilisé comme voie de transmission d'effort et d'absorption d'énergie supplémentaire, pour améliorer le comportement au choc du véhicule.

D'autres modes de fixation du carénage de protection 1 peuvent être envisagés. Il peut s'agir d'une fixation par des vis orientées différemment ou par des emmanchements.

Dans le cas d'un berceau 3 filtré, il est possible d'ajouter une cale élastique (non représentée) sur la fixation arrière 6b, 7b du profilé tubulaire 15.

On notera qu'il est également avantageux de prévoir, dans la zone du pilier 4, une cale élastique (non représentée) sur la fixation avant 6a du profilé tubulaire 15, de telle sorte que, lors d'un choc de type réparabilité, le carénage de protection 1 puisse reculer en récupérant les jeux sans détériorer le pilier 4, avant de mettre le berceau en contrainte.

La présente invention, à travers les deux modes de réalisation préférés décrits ci-avant, présente de nombreux avantages, parmi lesquels :
- une possibilité de supprimer les prolonges de berceau,
- une amélioration de la sécurité passive du véhicule, par augmentation de la capacité d'absorption d'énergie du carénage de protection moteur en cas de choc et aussi de la surface d'appui de la face avant qui maintient alors la partie inférieure des piliers du bloc avant,
- une amélioration de l'acoustique du véhicule, le carénage de protection renforcé, outre qu'il joue un rôle d'insonorisant, permettant d'augmenter si besoin la filtration du berceau, puisqu'il n'y a plus de prolonges de berceau fixées sur le berceau.

Bien entendu, la présente invention n'est pas limitée aux modes de réalisation décrits et représentés ci-dessus à titre d'exemples ; d'autres modes de réalisation peuvent être conçus par l'homme de métier sans sortir du cadre et de la portée de la présente invention, telle que définie par les revendications.

## Revendications

1. Bloc avant de véhicule, comprenant un carénage (1) de protection moteur renforcé pour véhicule, un berceau moteur (3), un pilier (4) et des brancards (2a,2b), ledit carénage (1) présentant une partie principale en forme de plaque (la) intégrant deux parties de renforcement (5,15) situées à proximité de l'un et l'autre des deux bords latéraux de ladite partie principale en forme de plaque (la) et s'étendant sensiblement suivant la direction correspondant à la direction de marche (M) du véhicule, lesdites parties de renforcement (5,15) étant constituées par des pièces rapportées, et étant, d'une part, fixées sur la partie principale en forme de plaque (1a), et étant, d'autre part, pourvues, dans leur partie avant et dans leur partie arrière, d'éléments de fixation supplémentaires dudit carénage de protection (1) sur le véhicule, de manière à améliorer l'efficacité des parties de renforcement (5,15) lors d'un choc du véhicule, lesdits éléments de fixation supplémentaires étant des vis de fixation (7b), et les parties de renforcements (5, 15) étant pourvues, dans leur partie avant et dans leur partie arrière, d'orifices transversaux (6a, 6b) pour le passage des vis de fixation (7b),
**caractérisé en ce que** les orifices avant (6a) servent au passage de vis de fixation qui sont reprises sous le pilier (4) du bloc avant.

2. Bloc avant selon la revendication 1, **caractérisé en ce que** les parties de renforcement (5,15) présentent une section (S) sensiblement constante selon leur direction longitudinale.

3. Bloc avant selon la revendication 1, **caractérisé en ce que** les parties de renforcement (5, 15) présentent une section (S) évolutive qui augmente progressivement de la partie avant vers la partie arrière desdites parties de renforcement (5, 15).

4. Bloc avant selon l'une quelconque des revendications 2 ou 3, **caractérisé en ce que** la section (S) des parties de renforcement (5, 15) est choisie parmi l'une des formes suivantes : carrée, rectangulaire, polygonale, ou en « huit ».

5. Bloc avant selon l'une quelconque des revendications 1 à 4, **caractérisé en ce que** la partie principale en forme de plaque (1a) est pourvue de nervures (1c; 1d) , de façon à améliorer sa rigidité.

6. Bloc avant selon l'une quelconque des revendications précédentes, **caractérisé en ce que** les parties de renforcement (5,15) sont obtenues par injection d'une matière plastique de type polypropyléne.

7. Bloc-avant selon la revendication 6, **caractérisé en ce que** les parties de renforcement (5,15) incorporent des inserts métalliques directement surmoulés lors de l'injection de la matière plastique.

8. Bloc avant selon l'une des revendications précédente, **caractérisé en ce que** les deux parties de renforcement (5) sont constituées de cloisons croisées (ci), obliques, sensiblement verticales, de manière à ce que le carénage de protection moteur (1) absorbe mieux l'énergie lors d'un choc du véhicule.

9. Bloc avant selon la revendication 8, **caractérisé en ce que** lesdits réseaux de cloisons croisées (cᵢ), obliques, forment une structure de type « nid d'abeille » à cellules à section quadrilatérale.

10. Bloc avant selon l'une quelconque des revendications 1 à 7, **caractérisé en ce que** les deux parties de renforcement (15) sont constituées par des profilés tubulaires.

11. Bloc avant selon la revendication 18, **caractérisé en ce que** les profilés tubulaires (lui sont pourvus d'entretoises disposées à l'intérieur de leur section (S), de façon a empêcher l'écrasement de la section (S) lors du serrage des vis de fixation.

12. Bloc avant selon la revendication 1 **caractérisé en ce qu'**il est prévu une plaque d'appui (9), soudée sur le pilier (4) et située devant la section (S) de la partie de renforcement (5, 15), de façon à avoir une surface d'appui plane cite la partie de renforcement (5, 15) contre ledit pilier (4),

13. Bloc selon l'une quelconque des revendications 12 **caractérisé en ce qu'**il est prévu une cale élastique sur la fixation arrière (6b, 7b) de la partie de renforcement (5, 15).

14. Bloc selon l'une quelconque des revendications 1,12 ou 13, **caractérisé en ce qu'**il est prévu une cale élastique sur à fixation avant (6a) de la partie de renforcement (5, 15).

## Claims

1. A front end of a vehicle, comprising a reinforced engine protection shielding (1) for a vehicle, an engine cradle (3), a pillar (4) and side rails (2a, 2b), the said shielding (1) having a main plate-shaped part (1a) integrating two reinforcement parts (5, 15) situated close to the one and other of the two lateral edges of the said main plate-shaped part (1a) and extending substantially along the direction corresponding to the direction of movement (M) of the vehicle, the said reinforcement parts (5, 15) being constituted by added parts and being, on the one hand, fixed on the main plate-shaped part (1a), and being, on the other hand, provided in their front part and in their rear part with additional fixing elements of the said protection shielding (1) on the vehicle, so as to improve the efficiency of the reinforcement parts (5, 15) in the case of an impact of the vehicle, the said additional fixing elements being fixing screws (7b), and the reinforcement parts (5, 15) being provided, in their front part and in their rear part, with transverse openings (6a, 6b) for the passage of the fixing screws (7b),
**characterized in that** the front openings (6a) serve for the passage of fixing screws which are taken up beneath the pillar (4) of the front end.

2. The front end according to Claim 1, **characterized in that** the reinforcement parts (5, 15) have a section (S) which is substantially constant along their longitudinal direction.

3. The front end according to Claim 1, **characterized in that** the reinforcement parts (5, 15) have a developing section (S) which increases progressively from the front part towards the rear part of the said reinforcement parts (5, 15).

4. The front end according to any one of Claims 2 or 3, **characterized in that** the section (S) of the reinforcement parts (5, 15) is selected from one of the following shapes: square, rectangular, polygonal or as an "eight".

5. The front end according to any one of Claims 1 to 4, **characterized in that** the main plate-shaped part (1a) is provided with ribs (1c ; 1d), so as to improve its rigidity.

6. The front end according to any one of the preceding claims, **characterized in that** the reinforcement parts (5, 15) are obtained by injection of a plastic material of the polypropylene type.

7. The front end according to Claim 6, **characterized in that** the reinforcement parts (5, 15) incorporate metallic inserts directly over-moulded during the injection of the plastic material

8. The front end according to any one of the preceding claims, **characterized in that** the two reinforcement parts (5) are constituted by oblique, substantially vertical crossed partitions (ci), so that the engine protection shielding (1) absorbs the energy better in the case of an impact of the vehicle.

9. The front end according to Claim 8, **characterized in that** the said networks of oblique crossed partitions (ci) form a structure of the "honeycomb" type, with cells of quadrilateral section.

10. The front end according to any one of Claims 1 to 7, **characterized in that** the two reinforcement parts (15) are constituted by tubular profiles.

11. The front end according to Claim 10, **characterized in that** the tubular profiles (15) are provided with cross-pieces disposed inside their section (S), so as to prevent the crushing of the section (S) on tightening of the fixing screws.

12. The front end according to Claim 1, **characterized in that** a support plate (9) is provided, welded to the pillar (4) and situated in front of the section (S) of the reinforcement part (5, 15) so as to have a flat support surface of the reinforcement part (5, 15) against the said pillar (4).

13. The end according to any one of Claims 1 or 12, **characterized in that** an elastic shim is provided on the rear fixing (6b, 7b) of the reinforcement part (5, 15).

14. The end according to any one of Claims 1, 12 or 13, **characterized in that** an elastic shim is provided on the front fixing (6a) of the reinforcement part (5, 15).

## Patentansprüche

1. Vorderer Block für Kraftfahrzeug, der eine verstärkte Motorschutzverkleidung (1) für Fahrzeug, ein Motoraufhängegerüst (3), einen Ständer (4) und Längsträger (2a, 2b) aufweist, wobei die Verkleidung (1) einen Hauptteil in Form einer Platte (1a) aufweist, der zwei Verstärkungsteile (5, 15) enthält, die in der Nähe des einen und des anderen der zwei seitlichen Ränder des Hauptteils in Form einer Platte (1a) liegen und sich im Wesentlichen entlang der Richtung erstrecken, die der Fahrrichtung (M) des Fahrzeugs entspricht, wobei die Verstärkungsteile (5, 15) aus angebauten Teilen bestehen und einerseits auf dem Hauptteil in Form einer Platte (1a) befestigt sind und andererseits in ihrem vorderen und in ihrem hinteren Teil mit zusätzlichen Elementen zum Befestigen der Schutzverkleidung (1) auf dem Fahrzeug versehen sind, um die Effizienz der Verstärkungsteile (5, 15) bei einem Aufprall des Fahrzeugs zu verbessern, wobei die zusätzlichen Befestigungselemente Befestigungsschrauben (7b) sind und wobei die Verstärkungsteile (5, 15) in ihrem vorderen und in ihrem hinteren Teil mit Queröffnungen (6a, 6b) für das Durchgehen der Befestigungsschrauben (7b) versehen sind,
**dadurch gekennzeichnet, dass** die vorderen Öffnungen (6a) dem Durchgehen von Befestigungsschrauben dienen, die unter dem Ständer (4) des vorderen Blocks wieder aufgenommen werden.

2. Vorderer Block nach Anspruch 1, **dadurch gekennzeichnet, dass** die Verstärkungsteile (5, 15) einen im Wesentlichen konstanten Querschnitt (S) entlang ihrer Längsrichtung aufweisen.

3. Vorderer Block nach Anspruch 1, **dadurch gekennzeichnet, dass** die Verstärkungsteile (5, 15) einen evolutiven Querschnitt (S) aufweisen, der allmählich von dem vorderen Teil zu dem hinteren Teil der Verstärkungsteile (5, 15) zunimmt.

4. Vorderer Block nach einem der Ansprüche 2 oder 3, **dadurch gekennzeichnet, dass** der Querschnitt (S) der Verstärkungsteile (5, 15) aus einer der folgenden Formen ausgewählt wird: Quadrat, Rechteck, Vieleck oder "Acht".

5. Vorderer Block nach einem der Ansprüche 1 bis 4, **dadurch gekennzeichnet, dass** der Hauptteil in Form einer Platte (1a) mit Rippen (1c; 1d) derart versehen ist, dass seine Starrheit verbessert wird.

6. Vorderer Block nach einem der vorhergehenden Ansprüche, **dadurch gekennzeichnet, dass** die Verstärkungsteile (5, 15) durch Einspritzen eines Kunststoffs des Typs Polypropylen erzielt werden.

7. Vorderer Block nach Anspruch 6, **dadurch gekennzeichnet, dass** die Verstärkungsteile (5, 15) metallische Einsätze enthalten, die direkt beim Einspritzen des Kunststoffs abgeformt werden.

8. Vorderer Block nach einem der vorhergehenden Ansprüche, **dadurch gekennzeichnet, dass** die zwei Verstärkungsteile (5) aus schrägen gekreuzten Wänden (ci) bestehen, die im Wesentlichen vertikal sind, so dass die Motorschutzverkleidung (1) die Energie bei einem Aufprall des Fahrzeugs besser absorbiert.

9. Vorderer Block nach Anspruch 8, **dadurch gekennzeichnet, dass** die Netze aus schrägen gekreuzten Wänden (c₁) eine Struktur des Typs "Wabe" mit Zellen mit vierseitigem Querschnitt bilden.

10. Vorderer Block nach einem der Ansprüche 1 bis 7, **dadurch gekennzeichnet, dass** die zwei Verstärkungsteile (15) aus röhrenförmigen Profilen bestehen.

11. Vorderer Block nach Anspruch 10, **dadurch gekennzeichnet, dass** die röhrenförmigen Profile (15) mit Abstandhaltern versehen sind, die in dem Inneren ihres Querschnitts (S) derart angeordnet sind, dass das Zusammendrücken des Querschnittes (S) beim Festziehen der Befestigungsschrauben verhindert wird.

12. Vorderer Block nach Anspruch 1, **dadurch gekennzeichnet, dass** er mit einer Auflageplatte (9) versehen ist, die auf den Ständer (4) geschweißt ist und sich vor dem Querschnitt (S) des Verstärkungsteils (5, 15) derart befindet, dass sie eine flache Auflagefläche des Verstärkungsteils (5, 15) gegen den Ständer (4) hat.

13. Block nach einem der vorhergehenden Ansprüche 1 oder 12, **dadurch gekennzeichnet, dass** er mit einer elastischen Verkeilung auf der hinteren Befestigung (6b, 7b) des Verstärkungsteils (5, 15) versehen ist.

14. Block nach einem der Ansprüche des 1, 12 oder 13, **dadurch gekennzeichnet, dass** er mit einer elastischen Verkeilung auf der vorderen Befestigung (6a) des Verstärkungsteils (5, 15) versehen ist.
